# EUROPÄISCHE PATENTSCHRIFT

(11) **EP 1 108 829 B1**
(45) Veröffentlichungstag und Bekanntmachung des Hinweises auf die Patenterteilung: **07.07.2004**
(21) Anmeldenummer: 00122460.9
(22) Anmeldetag: 13.10.2000
(51) Int. Cl.: E04F 17/02, C04B 38/08, F23J 13/02, B32B 13/14, F16L 59/00

(54) **Fertigelement aus Mantelstein und innerer Dämmschale sowie Herstellungsverfahren**
Prefabricated element comprising a mantle block and an internal insulating shell and manufacturing method
Elément préfrabriqué constitué d'une pierre de manteau et d'une coque isolante interne et procédé de fabrication

(30) Priorität: 14.12.1999 DE 19960252
(43) Veröffentlichungstag der Anmeldung: 20.06.2001
(73) Patentinhaber: SAINT-GOBAIN ISOVER G+H Aktiengesellschaft, 67059 Ludwigshafen (DE)
(72) Erfinder: Bihy, Lothar, 67657 Kaiserslautern (DE); Keller, Horst, 69259 Wilhelmsfeld (DE); Albrecht, Volker, 67360 Lingenfeld (DE); Becker, Michael, 67069 Ludwigshafen (DE)
(74) Vertreter: GROSSE BOCKHORNI SCHUMACHER

(56) Entgegenhaltungen:
- EP-A- 0 072 506
- DE-A- 1 922 581
- DE-A- 3 444 984
- DE-A- 3 623 071
- DE-A- 3 942 154
- DE-A- 10 031 899
- US-A- 4 804 580

## Beschreibung

Die Erfindung bezieht sich auf ein rohrartiges Fertigelement gemäß dem Oberbegriff des Anspruches 1 und auf ein Verfahren zur Herstellung eines solchen Fertigelementes.

Bei Kaminfertigelementen ist es bekannt (DE-A 1 922 581), Fertigelemente aus einer inneren Dämmschale und einem die Dämmschale umgebeneden Mantelstein herzustellen, bei dem die innere Dämmschale aus Mineralwolle als verlorene Schalung verwendet wird. Der Mantelstein besteht hierbei üblicherweise aus Beton. Da die Mantelsteine manuell auf dem Bau gehandhabt werden müssen, sind derartige Fertigelemente auf ein Gewicht von maximal 25 kg begrenzt, was dazu führt, daß derartige Kaminfertigelemente üblicherweise eine Länge von ca. 25 bis 30 cm aufweisen. An den Stirnflächen weisen diese Fertigelemente zumeist einen vorstehenden Ringfalz und auf der gegnüberliegenden Fläche eine entsprechende Ausnehmung auf, so daß sie formschlüssig übereinander angeordnet werden können.

Aufgabe der Erfindung ist es, ein rohrartiges Fertigelement, insbesondere ein Kaminfertigelement zu schaffen, welches einen leichtgewichtigen Aufbau aufweist und bei hoher Festigkeit sich mit geringen Wandstärken auslegen läßt, so daß es bei einem handhabbaren Gewicht von 25 kg sich mit großen Längen hergestellt werden kann, und sich ferner durch eine erhöhte Brandsicherheit auszeichnet.

Diese Aufgabe wird erfindungsgemäß durch die im kennzeichnenden Teil des Anspruches 1 enthaltenen Merkmale gelöst, wobei zweckmäßige Weiterbildungen durch die in den Unteransprüchen angegebenen Maßnahmen gekennzeichnet sind.

Nach Maßgabe der Erfindung wird der Mantelstein aus Brandschutzmasse hergestellt, wobei in einer Grundmatrix poröse Körper in Grobkomstruktur verteilt sind, wodurch sich eine erhöhte Brandsicherheit bei gleichzeitig geringem Gewicht ergibt. Infolge der grobkörnigen Porenstruktur zeichnet sich der Mantelstein durch hohe Festigkeit aus, so daß die Wandstärken des Mantelsteins vergleichsweise gering gehalten werden können. Infolge des leichtgewichtigen Aufbaus ist es möglich, die Mantelsteine mit Längen bis zu einem Meter auszuführen, ohne daß das auf dem Bau anzustrebende Handhabungsgewicht von maximal 25 kg überschritten wird. Dadurch erleichtert sich die Montage vor Ort erheblich und ergeben sich über eine fixe Länge gesehen weniger Fugenflächen.

Besonders vorteilhaft ist es, die Grundmatrix aus Brandschutzmörtel zu bilden und die porösen Körper in Art von Kugeln zu formen. Hierbei eignen sich insbesondere Glaskugeln, Tonkugeln und Perlitkugeln. Die Kugeln sollen hierbei innerhalb der Mörtelmatrix dicht gepackt und gleichmäßig verteilt sein.

Hierbei hat sich eine Volumengröße der Kugeln im Bereich von 25 µm bis 900 µm als zweckmäßig herausgestellt, insbesondere ist die Volumengröße vorteilhaft im Bereich von 75 µm bis 700 µm. Die mittlere Teilchengröße liegt hiebei bevorzugt im Bereich von 250 bis 350 µm, wobei in einer praktischen Ausführungsform mit guter Brandsicherheit und leichtem Gewicht eine Teilchengröße im Mittel von etwa 300 µm sich als zweckmäßig herausgestellt hat. Die vorgegebene Bandbreite erleichtert die Herstellung der Kugeln. Beispielsweise können die Kugeln auf Glasbasis aus recyclefähigem Material, insbesondere Altglas hergestellt werden, wobei die Herstellung der Kugeln durch Schmelzen von Altglas und Aufblähen durch Kristallwasser erfolgt. Durch die Porösität der Kugeln ergibt sich der leichtgewichtige Aufbau.

Bei der Herstellung der Mantelsteine kommt es auf eine sorgfältige Verfahrensführung an, weil eine gleichmäßige Verteilung der Kügelchen angestrebt wird. Hierzu wird das Gemisch aus pulverförmiger Mörtelbasis und Kugeln durch entsprechende Zugabe von Wasser angemischt und dabei sorgfältig verrührt. Hierbei ist die Verwendung eines Handrührers mit Umdrehungen im Bereich von 600 bis 900 Umdrehungen pro Minute zweckmäßig, was zu einer gleichmäßigen Verteilung der Kügelchen innerhalb des Mörtels führt. Der dadurch gießfähig gemachte Mörtel wird dann in die Form vergossen, wobei sich nach Formung eine außerordentlich glatte Außenfläche ergibt, die im Prinzip durch die Glattheit der Innenfläche der Außenform bedingt ist. Der dadurch hergestellte Mantelstein ist somit streichfähig und tapezierfähig, ohne daß es hierzu zusätzlicher Putzmaßnahmen bedarf.

Nachfolgend werden Ausführungsbeispiele der Erfindung anhand der Zeichnungen beschrieben. Darin zeigen
Figur 1 eine Schnittansicht durch ein erfindungsgemäßes Kaminfertigelement,
Figur 2 eine Draufsicht auf das in Figur 1 dargestellte Kaminfertigelement sowie
Figur 3 eine Draufsicht auf eine abgewandelte Ausführungsform.

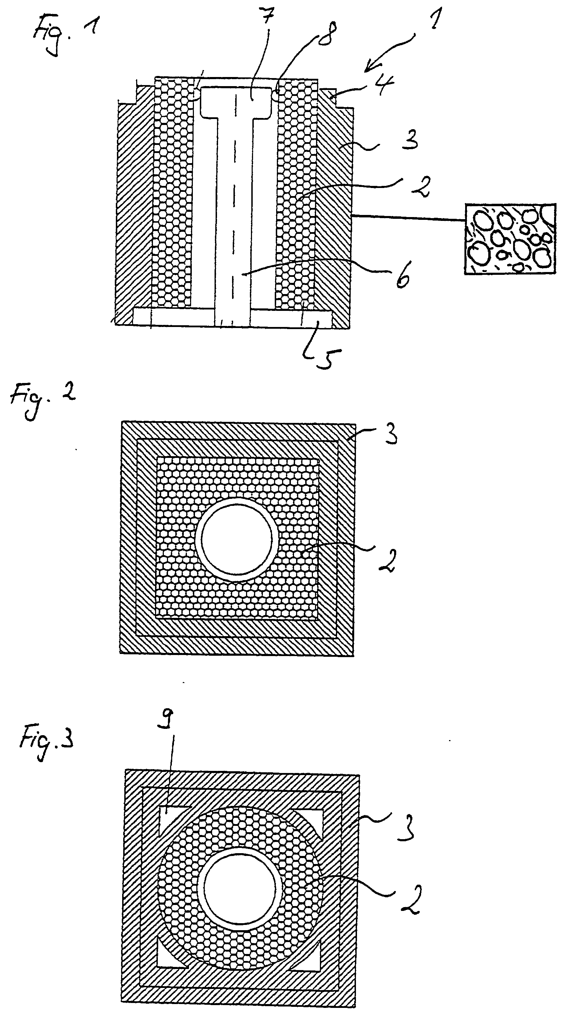

Das Kaminfertigelement 1 nach Figur 1 ist gebildet aus einer inneren Rohrschale 2 aus Dämmstoff und zwar Mineralwolle, je nach Anwendungstyp Stein- oder Glaswolle und einem Mantelstein 3, der die Dämmschale 2 eng umgibt. Der Mantelstein 3 ist aus im folgenden noch näher beschriebener Branschutzmasse hergestellt, wozu die innere Dämmschale 2 als Innenform und damit als verlorene Schalung dient.

Das in Figur 1 dargestellte Kaminfertigelement zeigt an einer Stirnfläche des Mantelsteins einen vorstehenden Ringfalz 4, der komplementär mit einer an der gegenüberliegenden Stirnfläche ausgebildeten Ausnehmung 5 ist. Dieser Ringfalz 4 dient zum Aufeinandersetzen der Mantelsteine, wobei der Ringfalz 4 in die Ausnehmung 5 eines aufgesetzten Mantelsteines eingreift. Selbstverständlich können auch andere geeignete Eingriffsmittel ausgebildet werden bzw. kann bei Bedarf auf einen Eingriffsfalz verzichtet werden, in welchem Falle dann die Stirnflächen im wesentlichen plan ausgebildet sind. Die Dämmschale 2 ist bei der Ausführungsform nach Figur 1 auf der ringfalzseitigen Stirnseite etwas über den Ringfalz 4 überstehend ausgebildet, wodurch beim Aufeinandersetzen der Mantelsteine eine lückenlos ausgefülle Dämmung erzielt wird, indem der vorstehende Teil der Dämmschale 2 durch den daraufgesetzten Mantelstein eingedrückt wird. Dadurch wird eine fugenfreie Dämmung erzielt.

Figur 1 zeigt zur Illustration ferner ein in den Mantelstein eingesetztes Schamotterohr 6, welches auch aus Kunststoff oder Edelstahl und dergleichen hergestellt sein kann. Das Schamotterohr ist am oberen Ende 7 durch einen Halter 8 gestützt, der ringförmig oder punktuell vorgesehen sein kann. Da die Längsausdehnung des Schamotterohrs 6 im Betriebszustand wesentlich größer ist als die der Dämmstoffschale 2, muß dieses im wesentlichen freistehend in der Dämmstoffschale 2 durch den Halter 8 geführt bzw. zentriert werden. Dabei kann der Halter 8 z.B. aus Edelstahl bestehen.

Bei der Ausführungsform nach Figur 2 ist die Dämmschale 2 außen an den Viereckkant des Mantelsteins 3 angepaßt, hingegen in der Ausführungsform nach Figur 3 außen mit einer zylindrischen Mantelfläche versehen, wiederum angepaßt an die Innenkontur des Mantelsteins, die in den Eckbereichen mit Aussparungen für die Brennerzuluft versehen ist. Diese werden durch Einsetzen von Kernen in die Form gebildet. Die Aussparungen sind mit 9 bezeichnet.

Zur Herstellung des Mantelsteins wird eine der äußeren Mantelfläche des gewünschten Mantelsteins entsprechende Form verwendet, in der die Dämmschale 2 fixiert wird. In dem dazwischen befindlichen Hohlraum, der der gewünschten Form des Mantelsteines entspricht, wird dann durch Anmischen von Wasser, giesfähig gemachte Brandschutzmasse eingegossen. Nach der Verfestigung wird die Außenform abgenommen und ist das Kaminelement fertig ausgebildet.

Die Brandschutzmasse wird pulverförmig bereitgestellt, so daß ein leichtes Anmischen mit Wasser unter Verrühren möglich ist. Hierbei basiert die Brandschutzmasse auf einer Grundmatrix aus Mörtel, in welche poröse Körper in Grobkornstruktur eingebettet sind. Bei den porösen Körpern kann es sich um Tonkörper, Perlitkörper und Glaskörper handeln, wobei Glaskörper besonders vorteilhaft sind. Die porösen Körper liegen in einer zweckmäßigen Ausführung in Kugelform vor. Die herausgezogene schematische Darstellung in Figur 1 zeigt die Kugeln in der Grundmatrix aus Mörtel.

Die Volumengröße der Kugeln liegen hierbei im Bereich von 25 µm bis 900 µm und zwar vorzugsweise im Bereich von 75 µm bis 700 µm. Die mittelere Teilchengröße liegt hierbei im Bereich von 200 bis 400 µm, vorzugsweise im Bereich von 250 bis 350 µm und in der bevorzugten Ausführungsform beträgt die mittlere Teilchengröße etwa 300 µm.

Der Volumenanteil der porösen Körper zur Mörtelmatrix beträgt 50 bis 60 Prozent. wobei in einer bevorzugten Ausführungsform, die von der speziellen Zusamensetzung her im nachfolgenden auch noch wiedergegeben wird, der Volumenanteil bei etwa 54 Prozent liegt, wobei die Messung pro 100 ml Volumenteile erfolgte mit einem Sieb von 0,100 µm bei einem Verhältnis der Volumenanteile von 46 ml Grundmatrix zu 54 ml Kugeln. Die Dichte der Grundmatrix (ermittelt über die Schüttdichte) liegt zweckmäßig im Bereich von 0,4 bis 0,9 g/cm³, insbesondere zweckmäßig im Bereich von 0,6 bis 0,8 g/cm³ und die Dichte der Kugeln bei 0,25 bis 0,6 g/cm³, insbesondere zweckmäßig 0,3 bis 0,45 g/cm³. Bei der nachfolgend wiedergegebenen Zusammensetzung beträgt hierbei die Dichte der Grundmatrix etwa 0,7 g/cm³ und die Dichte der Kugeln bei 0,37 g/cm³, wobei die Gesamtdichte etwa 0,54 g/cm³ beträgt.

Eine vorteilhafte Zusammensetzung gerade auch mit Hinblick auf eine gleichmäßige Porenverteilung der porösen Körper bzw. Kugeln innerhalb der Grundmatrix ist eine Matrix auf Glasbasis und eine Materialzusammensetzung der Kugeln ebenfalls auf Glasbasis. Zur stofflichen Abstimmung erhält diese Zusammensetzung ein geeignetes Plastifizierungsmittel, d.h. ein die Abbindung beeinflussendes Verdickungsmittel, wodurch gewährleistet ist, daß beim Rühren während des Anmischens eine gleichmäßige Verteilung der porösen Körper innerhalb der Grundmatrix und auch nach dem Vergießen der Brandschutzmasse in die Form erreicht wird, so daß die angestrebte homogene Porenstruktur mit gleichmäßig innerhalb der Grundmatrix verteilten Kugeln sicher gestellt ist. Hierbei muß die Grundmatrix ' beim Rühren eine derartige Zähigkeit aufweisen, daß die kugelförmigen porösen Körper in Schwebe gehalten werden und nicht zu Boden fallen.

Die Grundmatrix umfaßt hierbei einen Anteil von 20 bis 60, zweckmäßig 25 bis 50 % Siliziumdioxid, einen Anteil von etwa 5 bis 30 % Metalloxid, insbesondere Aluminiumoxid und Eisenoxid, etwa 20 bis 50 %, bevorzugt 25 bis 40 % Kalziumoxid, Gips mit einem Anteil von ≤ 10 Prozent, Natriumoxid und Kaliumoxid bei einer Summe von 0,5 bis 10 Prozent, bevorzugt 1 bis 7 Prozent sowie Rest organische Anteile, etwa Bindemittel, und restliche Verunreinigungen.

Die Zusemmensetzung der Kugeln auf Glasbasis beinhaltet etwa 55 bis 72 Prozent, bevorzugt 60 bis 68 Prozent Siliziumdioxid sowie Metalloxide, insbesondere Aluminiumoxid und Eisenoxid bei einem Anteil von etwa 0,5 bis 11 Prozent, Kalziumoxid im Bereich von 5 bis 25 Prozent, bevorzugt 10 bis 20 Prozent, Magnesium bevorzugt im Bereich von 1 bis 3 Prozent, Natriumoxid und Kaliumoxid bei einer Summe von 5 bis 17 Prozent, bevorzugt 8 bis 13 Prozent, Rest Verunreinigungen, wobei die Verunreinigungen weniger als 5 Prozent ausmachen sollen.

In einem Ausführungsbeispiel, welches gute Ergebnisse bezüglich Gewicht und glatter Außenfläche ergeben hat, weist die Mörtelmatrix die folgende Zusammensetzung in Gew.-% auf:

| Mörtelmatrix | |
|---|---|
| SiO2 | 36,4 |
| Al2O3 | 13,0 |
| Fe2O3 | 2,2 |
| CaO | 30,6 |
| MgO | 2,8 |
| Na2O | 1,5 |
| K2O | 1,4 |
| SO3 | 1,7 |

Rest organische Anteile, wie Plastifizierungsmittel und Verunreinigungen.

Die Zusammensetzung der Kugeln beträgt hierbei in Gew.-%

| Kugelmaterial | |
|---|---|
| SiO2 | 65,2 |
| Al2O3 | 2,8 |
| Fe2O3 | 0,6 |
| CaO | 14,6 |
| MgO | 2,4 |
| Na2O | 10,2 |
| K2O | 0,7 |
| Rest Verunreinigungen | |

Zur Herstellung wird das pulverförmige Ausgangsmaterial der Grundmatrix, dem die Kugeln beigegeben sind, durch Anmischen von Wasser zu einer gießfähigen Brandschutzmasse gemischt, wobei durch Rühren eine gleichmäßige Verteilung der Kugeln innerhalb der Grundmatrix erreicht wird. Als Mischer eignen sich hier insbesondere handwerkliche Rührmaschinen, die etwa als Rührvorsatz an Bohrmaschinen befestigt werden können. Das Anmischen über konventionelle Freifallmischer ist unerwünscht, da dies zu einer einseitigen Ansammlung der Kügelchen führen würde.

Nach sorgfältigem Rühren der Brandschutzmasse wird die gießfähige Masse in die Form gegossen. Das nach Verfestigung erzeugte Kaminfertigelement zeichnet sich durch ein leichtes Raumgewicht aus, so daß größere Längen als bei den konventionellen Mantelsteinen hergestellt werden können, die noch manuell handhabbar sind. Ferner wird eine sehr glatte Außenfläche erzeugt, da die Kügelchen mit der Grundmatrix eine der Glattheit der Innenseite der verwendeten Form entsprechende Außenfläche ergibt. Hierbei ist es auch möglich, eine Form zu verwenden, die aus brandschutztechnisch geeignetem Material gebildet ist, welches z.B. aus Gipskarton- oder Faserzementplatten bestehen kann und als äußere verlorene Schalung dient.

Zusätzlich zeichnet sich das Kaminfertigelement dadurch aus, daß die Wandstärke des Außenmantels minimiert werden kann. Beispielsweise bei einer Dicke der Rohrschale aus Mineralwolle von 50 mm bei einer Rohdichte von 200 kg/m³ kann die Dicke des Mantelsteins auf eine Wandstärke von 15 mm reduziert werden, was gleichfalls zu einer entsprechenden Gewichtseinsparung beiträgt. Gleichwohl werden die Brandbestimmungen eingehalten gemäß F-90-Konstruktion bei Kaminen, wobei hier verlangt wird, daß die Konstruktion im Brandfall 90 Minuten standhalten muß. Dieses Kriterium wird in hervorragender Weise vom erfindungsgemäßen Mantelstein erfüllt und zwar infolge der Brandschutzmasse in Verbindung mit der Mineralwolle. Aufgrund der glatten Außenfläche des Fertigelementes kann dieses unmittelbar gestrichen oder tapeziert werden.

Infolge des Vergießens der Brandschutzmasse können alle erforderlichen Anschlüsse direkt mit berücksichtigt werden, wie beispielsweise Nut und Feder für den wärmebrückenfreien Zusammenbau der einzelnen Elemente, Anschluß für Befeuerung oder Luftabzweigungen, Revisionsöffnungen etc.. Dabei entfallen aufwendige Nachbearbeitungen vor Ort. Weiterhin ist die äußere Abmessung der Mineralwolle weitgehendst frei in der Toleranzlage, da die Formgebung durch den Guß mit der Brandschutzmasse geschieht. Daraus resultiert eine erhebliche Kostenreduktion bei der Herstellung der Mineralwolldämmung. Als Brandschutzmasse kann auch Metallhydroxid mit Magnesiabinder verwendet werden.

Selbstverständlich sind die rohrartigen Fertigelemente völlig unabhängig von der äußeren Form, können also rund, eckig, oval oder dergleichen ausgeführt werden. Auch die Abmessung des Fertigelementes ist nur abhängig vom jeweiligen Verwendungszweck und es können alle üblichen Systeme im Kaminbereich, also Einzüge, Mehrzüge, mit Hinterlüftung, mit separatem Luftzuführungskanal und dergleichen, hergestellt werden.

## Patentansprüche

1. Rohrartiges fertigelement aus Mantelstein und innerer Dämmschale aus vorzugsweise Mineralwolle zur Herstellung von Kaminen, Lüftungsleitungen, Kabelschächten und dergleichen, insbesondere von Kaminfertigelementen, **dadurch gekennzeichnet, daß** der Mantelstein aus Brandschutzmasse hergestellt ist und eine Grundmatrix aus Feinstkorn aufweist, in welche in im wesentlichen gleichmäßiger Verteilung poröse Körper in Grobkornstruktur eingebettet sind.

2. Fertigelement nach Anspruch 1, **dadurch gekennzeichnet, daß** die Grundmatrix aus Brandschutzmörtel gebildet ist.

3. Fertigelement nach Anspruch 1 oder 2, **dadurch gekennzeichnet, daß** die porösen Körper durch kugelförmige Körper gebildet sind.

4. Fertigelement nach einem der vorhergehenden Ansprüche, **dadurch gekennzeichnet, daß** die kugelförmigen Körper bzw. Kugeln in dichter Packung in der Grundmatrix vorliegen.

5. Fertigelement nach einem der vorhergehenden Ansprüche, **dadurch gekennzeichnet, daß** die Volumengröße der Kugeln im Bereich von 25 µm bis 900 µm, vorzugsweise 75 µm bis 700 µm liegt.

6. Fertigelement nach Anspruch 5, **dadurch gekennzeichnet, daß** die mittlere Teilchengröße im Bereich von 200 bis 400 µm, vorzugsweise im Bereich von 250 bis 350 µm liegt, insbesondere etwa 300 µm beträgt.

7. Fertigelement nach einem der vorhergehenden Ansprüche, **dadurch gekennzeichnet, daß** die Dichte der Grundmatrix, ermittelt über die Schüttdichte, im Bereich von 0,4 bis 0,9 g/cm³, insbesondere im Bereich von 0,6 bis 0,8 g/cm³ liegt, insbesondere bevorzugt etwa 0,7 g/cm³ beträgt, und daß die Dichte der Kugeln bei 0,25 bis 0,6 g/cm³, insbesondere 0,3 bis 0,45 g/cm³ liegt, insbesondere bevorzugt etwa 0,4 g/cm³ beträgt.

8. Fertigelement nach einem der vorhergehenden Ansprüche, **dadurch gekennzeichent, daß** die Dichte des aus Brandschutzmörtel gebildetem Mantelsteins im Bereich von 0,4 bis 0,6 g/cm³ liegt, insbesondere etwa 0,54 g/cm³ beträgt.

9. Fertigelement nach einem der vorhergehenden Ansprüche, **dadurch gekennzeichnet, daß** der Volumenanteil der porösen Körper zur Grundmatrix 50 bis 60 Prozent beträgt.

10. Fertigelement nach einem der vorhergehenden Ansprüche, **dadurch gekennzeichnet, daß** die Mörtelmatrix in Gew.-% gebildet ist aus
| | |
|---|---|
| SiO2 | 20 - 60 |
| Al2O3 | 5 - 20 |
| Fe2O3 | < 8 |
| CaO | 20 - 50 |
| MgO | < 15 |
| Na2O + K2O | 0,5 - 10 |
| SO3 | < 10 |
(wobei 5 bis 15 Gew.-% organische Anteile, wie Plastifizierungsmittel und restliche Verunreinigungen betragen können).

11. Fertigelement nach Anspruch 10, **dadurch gekennzeichnet, daß** die Mörtelmatrix gebildet ist in Gew.-% aus
| | |
|---|---|
| SiO2 | 25 - 50 |
| Al2O3 | 8 - 17 |
| Fe2O3 | 1 - 5 |
| CaO | 25 - 40 |
| MgO | 1-10 |
| Na2O + K2O | 1 - 7 |
| SO3 | < 7,5 |
(wobei 5 bis 15 Gew.-% organische Anteile und restliche Verunreinigungen betragen können).

12. Fertigelement nach einem der vorhergehenden Ansprüche, **dadurch gekennzeichnet, daß** die porösen Körper gebildet sind aus Glas mit der Zusammensetzung in Gew.-%
| | |
|---|---|
| SiO2 | 55 - 72 |
| Al2O3 | 0,5 - 8 |
| Fe2O3 | < 3 |
| CaO | 5 - 25 |
| MgO | 0,5 - 8 |
| Na2O + K2O | 5 - 17 |
Rest Verunreinigungen.

13. Fertigelement nach einem der vorhergehenden Ansprüche, **dadurch gekennzeichnet, daß** die porösen Körper gebildet sind aus Glas mit der Zusammensetzung in Gew.-%
| | |
|---|---|
| SiO2 | 60 - 68 |
| Al2O3 | 1,5 - 4 |
| CaO | 10 - 20 |
| MgO | 1 - 3 |
| Na2O + K2O | 8 - 13 |
Rest Verunreinigungen.

14. Verfahren zur Herstellung eines rohratigen Fertigelementes nach den Ansprüchen 1 bis 13, **gekennzeichnet durch**
- Anmischen eines Gemisch aus Mörtel und Kugeln unter ausreichender Wasserzugabe sowie einem Plastifizierungsmittel zur Erzeugung einer gußfähigen Masse und dabei Rühren zur gleichmäßigen Verteilung der porösen Körper innerhalb der Mörtelmasse,
- Eingießen der Masse in eine die Abmessungen der Außenseite des Fertigelementes betimmende Form, deren Innenform **durch** eine Dämmstoffschale aus Mineralwolle als verlorene Schalung gebildet ist,
- Entformung des Fertigelementes aus der Außenform nach ausreichender Verfestigung.

## Claims

1. Tubular finished element out of flue block and inner insulating shell preferably out of mineral wool for the production of chimneys, ventilation lines, cable ducts and the like, particularly of finished fireplace elements, **characterized in that** the flue block is made out of fireproof mass featuring a basic matrix out of finest grain, in which porous bodies are embedded basically evenly distributed in coarse grain structure.

2. Finished element according to claim 1 **characterized in that** the basic matrix is formed out of fireproof mortar.

3. Finished element according to claim 1 or 2 **characterized in that** the porous bodies are formed by spherical bodies.

4. Finished element according to one of the previous claims **characterized in that** the spherical bodies respectively spheres are available in dense packing in the basic matrix.

5. Finished element according to one of the previous claims **characterized in that** the volume size of the spheres is within the range from 25µm to 900µm, preferably between 75µm and 700µm.

6. Finished element according to claim **5 characterized in that** the average size of the particles is within the range from 200 to 400µm, preferably in the range from 250 to 350µm, particularly at about 300µm.

7. Finished element according to one of the previous claims **characterized in that** the density of the basic matrix, resulting from the bulk density, is within the range from 0.4 to 0.9g/cm³, particularly in the range from 0.6 to 0.8g/cm³, particularly preferred at about 0.7g/cm³, and that the density of the spheres is between 0.25 and 0.6g/cm³, particularly between 0.3 and 0.45g/cm³, particularly preferred at about 0.4g/cm³.

8. Finished element according to one of the previous claims **characterized in that** the density of the flue block formed out of fireproof mortar is within the range from 0.4 to 0.6g/cm³, particularly at about 0.54g/cm³.

9. Finished element according to one of the previous claims **characterized in that** the volume share of the porous bodies makes up 50 to 60 percent to the basic matrix.

10. Finished element according to one of the previous claims **characterized in that** the mortar matrix is formed out of weight % containing
| | |
|---|---|
| SiO2 | 20 - 60 |
| Al2O3 | 5 - 20 |
| Fe2O3 | < 8 |
| CaO | 20 - 50 |
| MgO | < 15 |
| Na2O + K2O | 0.5 - 10 |
| SO3 | < 10 |
(whereby 5 to 15 weight % can contain organic shares, like plasticizers and remaining impurities).

11. Finished element according to claim 10 **characterized in that** the mortar matrix is formed in weight % containing
| | |
|---|---|
| SiO2 | 25 - 50 |
| Al2O3 | 8 - 17 |
| Fe2O3 | 1 - 5 |
| CaO | 25 - 40 |
| MgO | 1 - 10 |
| Na2O + K2O | 1 - 7 |
| SO3 | < 7.5 |
(whereby 5 to 15 weight % can contain organic shares and remaining impurities).

12. Finished element according to one of the previous claims **characterized in that** the porous bodies are formed out of glass with a consistence in weight %
| | |
|---|---|
| SiO2 | 55 - 72 |
| Al2O3 | 0.5- 8 |
| Fe2O3 | <3 |
| CaO | 5 - 25 |
| MgO | 0.5- 8 |
| Na2O + K2O | 5 - 17 |
Remains impurities.

13. Finished element according to one of the previous claims **characterized in that** the porous bodies are formed out of glass with a consistence in weight %
| | |
|---|---|
| SiO2 | 60 - 68 |
| Al2O3 | 1.5- 4 |
| CaO | 10-20 |
| MgO | 1-3 |
| Na2O + K2O | 8 - 13 |
Remains impurities

14. Method for the production of a tubular finished element according to claims 1 to 13 **characterized in that**
- preparing a mixture of mortar and spheres while applying sufficient water as well as a plasticizer to produce a pourable mass and at the same time stirring the mortar mass to distribute the porous bodies evenly,
- pouring the mass into a mould defined by the measurements of the outer face of the finished element, which inner form features a lost moulding caused by an insulating shell made out of mineral wool,
- removing the finished element from the outer mould after sufficient hardening.

## Revendications

1. Elément préfabriqué tubulaire composé d'un boisseau et d'une coquille isolante interne composée de préférence de laine minérale pour la construction de cheminées, de conduits d'aération, de gouttières de câbles et analogues, en particulier pour la fabrication d'éléments préfabriqués de cheminées, **caractérisé en ce que** le boisseau est réalisé à partir d'une masse incombustible et qu'il présente une matrice de base à grains très fins, dans laquelle sont incorporés des corps poreux de structure à grains grossiers selon une répartition essentiellement régulière.

2. Elément préfabriqué selon la revendication 1, **caractérisé en ce que** la matrice de base se compose de mortier incombustible.

3. Elément préfabriqué selon la revendication 1 ou 2, **caractérisé en ce que** les corps poreux sont des corps sphériques.

4. Elément préfabriqué selon l'une quelconque des revendications précédentes, **caractérisé en ce que** les corps sphériques ou les billes sont présents dans la matrice selon un tassement compact.

5. Elément préfabriqué selon l'une quelconque des revendications précédentes, **caractérisé en ce que** le calibre des billes est de 25 µm à 900 µm, de préférence de 75 µm à 700 µm.

6. Elément préfabriqué selon la revendication 5, **caractérisé en ce que** la granulométrie moyenne est de 200 µm à 400 µm, de préférence de 250 µm à 350 µm, et qu'elle est en particulier d'environ 300 µm.

7. Elément préfabriqué selon l'une quelconque des revendications précédentes, **caractérisé en ce que** la masse volumique de la matrice de base, déterminée d'après la masse volumique apparente, est de 0,4 g/cm³ à 0,9 g/ cm³, en particulier de 0,6 g/cm³ à 0,8 g/cm³ et qu'elle est, de manière plus particulièrement préférée, de 0,7 g/cm³, et que la masse volumique des billes est de 0,25 g/cm³ à 0,6 g/cm³, en particulier de 0,3 g/cm³ à 0,45 g/cm³ et qu'elle est, de manière plus particulièrement préférée, de 0,4 g/cm³.

8. Elément préfabriqué selon l'une quelconque des revendications précédentes, **caractérisé en ce que** la masse volumique du boisseau composé de mortier incombustible est de 0,4 g/cm³ à 0,6 cm³ et qu'elle est en particulier de 0,54 g/cm³.

9. Elément préfabriqué selon l'une quelconque des revendications précédentes, **caractérisé en ce que** la proportion volumique du corps poreux par rapport à la matrice de base est de 50% à 60%.

10. Elément préfabriqué selon l'une quelconque des revendications précédentes, **caractérisé en ce que** la matrice du mortier, exprimé en % en poids, est composée de
| | |
|---|---|
| SiO₂ | 20 à 60 |
| Al₂O₃ | 5 à 20 |
| Fe₂O₃ | < 8 |
| CaO | 20 à 50 |
| MgO | < 15 |
| Na₂O + K₂O | 0,5 à 10 |
| SO₃ | < 10 |
(5% à 15% en poids pouvant être constitués de composants organiques tels que des plastifiants et des impuretés résiduelles) .

11. Elément préfabriqué selon la revendication 10, **caractérisé en ce que** la matrice du mortier, exprimé en % en poids, est composée de
| | |
|---|---|
| SiO₂ | 25 à 50 |
| Al₂O₃ | 8 à 17 |
| Fe₂O₃ | 1 à 5 |
| CaO | 25 à 40 |
| MgO | 1 à 10 |
| Na₂O + K₂O | 1 à 7 |
| SO₃ | < 7,5 |
(5% à 15% en poids pouvant être constitués de composants organiques tels que des plastifiants et des impuretés résiduelles).

12. Elément préfabriqué selon l'une quelconque des revendications précédentes, **caractérisé en ce que** les corps poreux sont composés de verre présentant la composition, exprimée en % en poids
| | |
|---|---|
| SiO₂ | 55 à 72 |
| Al₂O₃ | 0,5 à 8 |
| Fe₂O₃ | < 3 |
| CaO | 5 à 25 |
| MgO | 0,5 à 8 |
| Na₂O + K₂O | 5 à 17 |
| Reste | impuretés. |

13. Elément préfabriqué selon l'une quelconque des revendications précédentes, **caractérisé en ce que** les corps poreux sont composés de verre présentant la composition, exprimée en % en poids
| | |
|---|---|
| SiO₂ | 60 à 68 |
| Al₂O₃ | 1,5 à 4 |
| CaO | 10 à 20 |
| MgO | 1 à 3 |
| Na₂O + K₂O | 8 à 13 |
| Reste | impuretés. |

14. Procédé de fabrication d'un élément préfabriqué tubulaire selon les revendications 1 à 13, **caractérisé en ce que**
- l'on gâche un mélange de mortier et de billes en ajoutant une quantité suffisante d'eau ainsi qu'un plastifiant pour produire une masse coulable et l'on agite simultanément pour obtenir une répartition régulière des corps poreux dans la masse de mortier,
- l'on coule la masse dans un moule déterminant les dimensions externes de l'élément préfabriqué, dont la forme interne est formée au moyen d'une coquille de matériau isolant composée de laine minérale en tant que coffrage perdu,
- l'on démoule l'élément préfabriqué du moule externe après un durcissement suffisant.
